# EUROPÄISCHE PATENTSCHRIFT

(11) **EP 2 633 273 B1**
(45) Veröffentlichungstag und Bekanntmachung des Hinweises auf die Patenterteilung: **05.08.2020**
(21) Anmeldenummer: 11754649.9
(22) Anmeldetag: 02.09.2011
(51) Int. Cl.: F02D 41/18, G01F 1/684, F02D 41/28, G01L 19/14, G01D 11/24, G01F 1/692, G01F 5/00

(54) **SENSORVORRICHTUNG ZUR ERFASSUNG EINER STRÖMUNGSEIGENSCHAFT EINES FLUIDEN MEDIUMS**
SENSOR DEVICE FOR DETECTING A FLOW PROPERTY OF A FLUID MEDIUM
DISPOSITIF CAPTEUR POUR DÉTECTER UNE PROPRIÉTÉ D'ÉCOULEMENT D'UN MILIEU FLUIDE

(30) Priorität: 28.10.2010 DE 102010043083
(43) Veröffentlichungstag der Anmeldung: 04.09.2013
(73) Patentinhaber: Robert Bosch GmbH, 70442 Stuttgart (DE)
(72) Erfinder: SCHNEIDER, Norbert, 75233 Tiefenbronn (DE); ETHERINGTON, Kurt, 70771 Leinfelden-Echterdingen (DE); KONZELMANN, Uwe, 71679 Asperg (DE); ROEHLER, Andreas, 99817 Eisenach (DE); KAUFMANN, Andreas, 71522 Backnang (DE); ULLRICH, Frank, 99817 Eisenach (DE); RITTMANN, Michael, 71254 Ditzingen (DE); DANN, Wolfgang, 99880 Truegleben (DE); BEYRICH, Hans, 71691 Freiberg/N (DE)
(86) Internationale Anmeldenummer: PCT/EP2011/065213
(87) Internationale Veröffentlichungsnummer: WO 2012/055622

(56) Entgegenhaltungen:
- EP-A1- 2 154 494
- DE-A1-102008 042 166
- US-A1- 2008 163 683
- US-B1- 6 468 222
- US-B1- 7 243 541

## Beschreibung

### Stand der Technik

Aus dem Stand der Technik sind zahlreiche Verfahren und Vorrichtungen zur Bestimmung von Strömungseigenschaften fluider Medien, also von Flüssigkeiten und/oder Gasen, bekannt. Bei den Strömungseigenschaften kann es sich dabei um grundsätzlich beliebige physikalisch und/oder chemisch messbare Eigenschaften handeln, welche eine Strömung des fluiden Mediums qualifizieren oder quantifizieren. Insbesondere kann es sich dabei um eine Strömungsgeschwindigkeit und/oder einen Massenstrom und/oder einen Volumenstrom handeln. Die Erfindung wird im Folgenden insbesondere beschrieben unter Bezugnahme auf so genannte Heißfilmluftmassenmesser, wie sie beispielsweise in Robert Bosch GmbH: Sensoren im Kraftfahrzeug, Ausgabe 2007, Seiten 140-142 beschrieben sind. Derartige Heißfilmluftmassenmesser basieren in der Regel auf einem Sensorchip, insbesondere einem Silicium-Sensorchip, mit einer Messoberfläche, welche von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden. Heißfilmluftmassenmesser sind üblicherweise als Steckfühler ausgestaltet, welcher fest oder austauschbar in ein Strömungsrohr einbringbar ist. Beispielsweise kann es sich bei diesem Strömungsrohr um einen Ansaugtrakt einer Brennkraftmaschine handeln.

Um aus den Sensorsignalen des Heißfilmluftmassenmessers präzise auf bestimmte Strömungseigenschaften des fluiden Mediums schließen zu können, ist es in vielen Fällen wünschenswert, weitere Informationen über das fluide Medium bereitstellen zu können. So wird beispielsweise in EP 1 017 931 B1 ein Sensor für eine Brennkraftmaschine vorgeschlagen, welcher einen Luftmassenmesser mit einem Sensorelement zur Erfassung der angesaugten Luftmasse aufweist. Benachbart zu dem Luftmassenmesser und dessen Sensorelement sind ein Feuchtesensor und ein Drucksensor sowie eine Auswerteschaltung zur Verarbeitung der von dem Luftmassenmesser bzw. dessen Sensorelement, dem Feuchtesensor und dem Drucksensor ausgegebenen Daten vorgesehen und in einem einzigen Gehäuse angeordnet.

Trotz der technischen Verbesserungen, welche durch die in der EP 1 017 931 B1 beschriebene Vorrichtung erzielbar sind, insbesondere der verbesserten Signalgenauigkeit und der Möglichkeit, weitere Eigenschaften des strömenden fluiden Mediums zu bestimmen, sind derartige kombinierte Sensoren mit verschiedenen technischen Herausforderungen behaftet. Diese Herausforderungen sind insbesondere konstruktiver und produktionstechnischer Natur. So sind Heißfilmluftmassenmesser bereits seit vielen Jahren kommerziell verfügbar und in zahlreichen Kraftfahrzeugen im Einsatz. Die Integration von Druck- und Feuchtesensoren in Heißfilmluftmassenmesser-Steckfühler, wie in der EP 1 017 931 B1 vorgeschlagen, macht jedoch in vielen Fällen eine Anpassung der Geometrie und des Designs der Steckfühler erforderlich. Bereits im Einsatz befindliche Steckfühler sind somit nicht oder nur schwer durch neue Steckfühler mit Druck- und Feuchtesensoren ersetzbar, da grundsätzlich das gesamte Modul ausgetauscht werden müsste. Weiterhin müssen Produktionsanlagen in vielen Fällen vollständig umgestellt und neu organisiert werden, sobald Steckfühler mit zusätzlicher Druck- und Feuchtemessung hergestellt werden sollen. Insbesondere das kombinierte Elektronikmodul mit Druck- und Feuchtesensor, wie in der EP 1 017 931 B1 vorgeschlagen, erfordert eine erhebliche Anpassung des Produktions- und Bestückungsvorgangs. Hierdurch wird ein Vorhalten äußerlich kompatibler Steckfühler unterschiedlicher Funktionalität, also von Steckfühlern mit Druck- und Feuchtemessung und Steckfühlern ohne eine derartige Druck- und Feuchtemessung, aus Kostengründen praktisch nicht realisierbar. Wünschenswert wäre daher eine Sensorvorrichtung zur Erfassung einer Strömungseigenschaft eines fluiden Mediums, welche eingerichtet ist, auch Druck- und Temperatursignale zu generieren, und welche auf einfache und kostengünstige Weise herstellbar ist, unter möglichst geringer Modifikation bekannter Herstellungsverfahren für Steckfühler ohne derartige Druck- und Feuchtemessungen.

Aus der DE 10 2008 042 166 A1 ist eine Sensoranordnung zur Bestimmung wenigstens eines Parameters eines strömenden fluiden Mediums, insbesondere einer Ansaugluftmasse einer Brennkraftmaschine bekannt, bei der die Sensoranordnung einen in das fluide Medium einbringbaren Steckfühler aufweist, in dem eine von dem Medium durchströmbare Kanalstruktur mit mindestens einem Kanal aufgenommen ist. Der Steckfühler umfasst einen Sensorchip zur Bestimmung des Parameters des fluiden Mediums sowie eine Ansteuer- und Auswerteschaltung, die auf einer Leiterplatte angeordnet ist. Die Leiterplatte weist einen in den Kanal hineinragenden Sensorträgerbereich auf, auf welchem der Sensorchip aufgenommen ist.

### Offenbarung der Erfindung

Es wird dementsprechend eine Sensorvorrichtung zur Erfassung mindestens einer Strömungseigenschaft eines strömenden fluiden Mediums vorgeschlagen, welche diesen Anforderungen zumindest weitgehend genügt und welche die Nachteile bekannter Sensorvorrichtungen dieser Art zumindest weitgehend vermeidet. Bezüglich der mindestens einen zu erfassenden Strömungseigenschaft, welche qualitativ und/oder quantitativ erfasst werden kann, kann beispielsweise auf die obige Beschreibung des Standes der Technik verwiesen werden. Insbesondere kann es sich bei dieser Strömungseigenschaft um eine Strömungsgeschwindigkeit und/oder einen Massenstrom und/oder einen Volumenstrom des fluiden Mediums handeln. Bei dem fluiden Medium kann es sich insbesondere um ein Gas, vorzugsweise um Luft handeln. Die Sensorvorrichtung ist insbesondere einsetzbar in der Kraftfahrzeugtechnik, beispielsweise im Ansaugtrakt einer Verbrennungsmaschine. Auch andere Einsatzgebiete sind jedoch grundsätzlich möglich.

Die erfindungsgemäße Sensorvorrichtung zur Erfassung mindestens einer Strömungseigenschaft eines fluiden Mediums, umfasst
- einen in das fluide Medium einbringbaren Steckfühler mit einem Sensorgehäuse, das ausgebildet ist, in das fluide Medium hineinzuragen und eine am weitesten in das fluide Medium hineinragende Kopfseite, eine dem fluiden Medium entgegenweisende Stirnseite, eine dem fluiden Medium abgewandte Rückseite und zwei parallel zur Strömungsrichtung angeordnete einander gegenüberliegende Seiten in Form einer ersten Seite und einer zweiten Seite aufweist, wobei innerhalb des Sensorgehäuses ein Kanalbereich mit mindestens einem von dem fluiden Medium durchströmbaren Kanal aufgenommen ist und an der Stirnseite des Sensorgehäuses eine Kanaleinlassöffnung vorgesehen ist, über die das fluide Medium einströmen kann,
- einen Elektronikraum, der mindestens eine von einer Oberfläche des Sensorgehäuses aus zugängliche Vertiefung in dem Sensorgehäuse umfasst, wobei der Elektronikraum auf der ersten Seite mit einem Elektronikraumdeckel verschlossen ist,
- einem-Elektronikmodul, das einen Sensorträger umfasst, der einen Strömungssensor trägt, wobei das Elektronikmodul zumindest teilweise in dem Elektronikraum aufgenommen ist und der Sensorträger aus dem Elektronikraum in dem vom fluiden Medium durchströmbaren Kanal ragt.

Erfindungsgemäß sind weiterhin innerhalb des Sensorgehäuses mindestens ein Drucksensor und mindestens ein Feuchtesensor aufgenommen und das Sensorgehäuse umfasst mindestens einen von dem Elektronikraum getrennt ausgebildeten Sensorraum. Der Drucksensor und vorzugsweise auch der Feuchtesensor sind zumindest teilweise in dem Sensorraum aufgenommen. Der Elektronikraum und der Sensorraum sind so ausgebildet sind, dass sie von den einander gegenüberliegenden Seiten des Sensorgehäuses zugänglich sind.

Unter einem Sensorgehäuse ist dabei im Rahmen der vorliegenden Erfindung eine einteilige öder auch mehrteilige Vorrichtung zu verstehen, welche die Sensorvorrichtung nach außen zumindest weitgehend abschließt und zumindest weitgehend schützt gegenüber mechanischen Einwirkungen und vorzugsweise auch anderen Arten von Einwirkungen, beispielsweise chemischen Einwirkungen und/oder Feuchteeinwirkungen. Insbesondere kann das Sensorgehäuse mindestens einen Steckfühler umfassen oder als Steckfühler ausgestaltet sein, wobei der Steckfühler in das strömende fluide Medium einbringbar ist, wobei eine austauschbare oder auch eine permanente Einbringung denkbar ist. Der Steckfühler kann beispielsweise in ein Strömungsrohr des strömenden fluiden Mediums hineinragen, wobei das Strömungsrohr selbst Bestandteil der Sensorvorrichtung sein kann oder auch als separates Teil vorgesehen werden kann, beispielsweise mit einer Öffnung, in welche der Steckfühler einbringbar ist. Der Steckfühler und das Strömungsgehäuse können insbesondere zumindest teilweise aus einem Kunststoffmaterial hergestellt sein, beispielsweise mittels eines Spritzgussverfahrens.

In dem Sensorgehäuse ist mindestens ein Elektronikmodul mit mindestens einem Strömungssensor zur Erfassung der Strömungseigenschaft aufgenommen. Unter einer Aufnahme in dem Sensorgehäuse ist dabei zu verstehen, dass das Elektronikmodul zumindest teilweise, vorzugsweise vollständig, von dem Sensorgehäuse umschlossen sein soll. Das Elektronikmodul ist zumindest teilweise in mindestens einem Elektronikraum des Sensorgehäuses angeordnet. Unter einem Elektronikraum wird dabei im Rahmen der vorliegenden Erfindung ein teilweise oder vollständig abgeschlossener Raum innerhalb des Gehäuses verstanden, welcher in zumindest einer Richtung durch das Gehäuse abgeschlossen ist. Vorzugsweise umfasst der Elektronikraum mindestens eine von einer Oberfläche des Gehäuses aus zugängliche Vertiefung in dem Gehäuse, beispielsweise eine quaderförmige Vertiefung. Der Elektronikraum kann, wie unten noch näher ausgeführt wird, beispielsweise für eine Bestückung zugänglich sein, beispielsweise von der Oberfläche her, und kann durch mindestens ein Verschlusselement, beispielsweise mindestens einen Elektronikraumdeckel, permanent oder reversibel verschließbar sein.

Unter einem Strömungssensor ist dabei grundsätzlich ein beliebiges Sensorelement zu verstehen, welches zur Erfassung der mindestens einen Strömungseigenschaft ausgestaltet ist. Insbesondere kann es sich bei dem Strömungssensor um mindestens einen Heißfilmluftmassenmesserchip handeln, beispielsweise der oben beschriebenen Art. Insbesondere kann dieser Heißfilmluftmassenmesserchip mindestens einen Siliciumchip umfassen, mit einer Messoberfläche, welche von dem strömenden fluiden Medium überströmbar ist. Auf dieser Sensoroberfläche können sich beispielsweise mindestens ein Heizelement und mindestens zwei Temperaturfühler befinden, wobei, wie oben beschrieben, aus einer Asymmetrie des mittels der Temperaturfühler gemessenen Temperaturprofils auf die mindestens eine Strömungseigenschaft schließbar sein kann. Der mindestens eine Strömungssensor ist auf einem Sensorträger des Elektronikmoduls angeordnet, welcher in das strömende fluide Medium hineinragt. Das Elektronikmodul kann insbesondere einteilig ausgestaltet sein und kann insbesondere eine Ansteuer-und/oder Auswerteschaltung tragen, welche eingerichtet ist, um den Strömungssensor anzusteuern und/oder Signale des Strömungssensors aufzunehmen. Dementsprechend kann das Elektronikmodul beispielsweise mindestens einen Schaltungsträger aufweisen. Weiterhin weist das Elektronikmodul den mindestens einen Sensorträger auf, welcher mit dem Schaltungsträger vorzugsweise mechanisch verbunden ist. Beispielsweise kann der Schaltungsträger in einem Elektronikraum des Sensorgehäuses angeordnet sein, und der Sensorträger kann aus diesem Elektronikraum heraus in das fluide Medium hineinragen. Das Sensorgehäuse weist mindestens einen von dem fluiden Medium durchströmbaren Kanal auf, wobei der Sensorträger des Elektronikmoduls, welcher den Strömungssensor trägt, aus dem Elektronikraum in den mindestens einen von dem fluiden Medium durchströmbaren Kanal in dem Sensorgehäuse ragt. Dieser mindestens eine Kanal kann insbesondere einteilig ausgestaltet sein, kann jedoch auch mindestens einen Hauptkanal und mindestens einen von diesem Hauptkanal abzweigenden Bypasskanal aufweisen, wobei der Sensorträger vorzugsweise in den Bypasskanal hineinragt, wie dies grundsätzlich aus dem Stand der Technik bekannt ist. Der Schaltungsträger des Elektronikmoduls kann insbesondere eine Leiterplatte umfassen, welche in Alleinstellung verwendet wird oder welche beispielsweise auch auf einem mechanischen Träger montiert ist, beispielsweise einem Stanz-Biege-Teil, beispielsweise aus einem metallischen Werkstoff. Der Sensorträger kann mit dem Schaltungsträger unmittelbar verbunden sein oder auch mit dem Trägerteil, beispielsweise dem Stanz-Biege-Teil, beispielsweise indem der Sensorträger an dieses Stanz-Biege-Teil angespritzt ist. Auch andere Ausgestaltungen sind möglich. So ist beispielsweise denkbar, das Elektronikmodul aus einem Leiterplattenmaterial herzustellen, wobei sowohl der Schaltungsträger als auch der Sensorträger aus dem Leiterplattenmaterial hergestellt sind, vorzugsweise aus einem Stück des Leiterplattenmaterials. Wiederum alternativ oder zusätzlich ist es auch möglich, aus dem Stand der Technik bekannte spritzgegossene Leiterplatten als Elektronikmodul zu verwenden, beispielsweise spritzgegossene Leiterplatten in einer oder mehreren so genannten MID-Techniken (MID: molded interconnect device). Verschiedene Ausgestaltungen sind denkbar.

Die Sensorvorrichtung weist weiterhin mindestens einen Drucksensor und mindestens einen Feuchtesensor auf. Der Drucksensor und der Feuchtesensor sind innerhalb des Sensorgehäuses aufgenommen. Unter einer Anordnung innerhalb des Sensorgehäuses ist wiederum eine Anordnung zu verstehen, bei welcher sowohl der Drucksensor als auch der Feuchtesensor zumindest teilweise von dem Sensorgehäuse umschlossen sind, vorzugsweise vollständig. Der Drucksensor und vorzugsweise auch der Feuchtesensor sind zumindest teilweise und vorzugsweise vollständig in mindestens einem von dem Elektronikraum getrennt ausgebildeten Sensorraum aufgenommen. Analog zu dem Elektronikraum wird unter einem Sensorraum im Rahmen der vorliegenden Erfindung ein teilweise oder vollständig abgeschlossener Raum innerhalb des Gehäuses verstanden, welcher in zumindest einer Richtung durch das Gehäuse abgeschlossen ist. Vorzugsweise umfasst der Sensorraum mindestens eine von einer Oberfläche des Gehäuses aus zugängliche Vertiefung in dem Gehäuse, beispielsweise eine quaderförmige Vertiefung. Der Sensorraum kann, wie unten noch näher ausgeführt wird, beispielsweise für eine Bestückung zugänglich sein, beispielsweise von der Oberfläche her, und kann durch mindestens ein Verschlusselement, beispielsweise mindestens einen Sensorraumdeckel, permanent oder reversibel verschließbar sein. Der Elektronikraumdeckel und der Sensorraumdeckel sind auf einander gegenüberliegenden Seiten des Gehäuses angeordnet sein. Alternativ kann der Sensorraum auch zumindest teilweise geöffnet sein, beispielsweise indem dieser als Vertiefung in dem Gehäuse ausgestaltet ist, beispielsweise als eine dem Elektronikraum gegenüberliegende Vertiefung. Bevorzugt ist jedoch eine verschließbare Ausgestaltung, bei der beispielsweise der Sensorraum durch einen Sensorraumdeckel verschließbar ist.

Unter einem Drucksensor ist dabei grundsätzlich ein beliebiges Sensorelement zu verstehen, welches eingerichtet ist, um einen Druck des fluiden Mediums zu erfassen. Insbesondere kann es sich hierbei um einen mikromechanischen Drucksensor handeln, wie er beispielsweise in Robert Bosch GmbH: Sensoren im Kraftfahrzeug, Seiten 128-130 beschrieben ist. Auch andere Arten von Drucksensoren sind jedoch alternativ oder zusätzlich einsetzbar, beispielsweise Drucksensoren, welche unmittelbar auf der Verwendung eines oder mehrerer Dehnungsmessstreifen oder ähnlichen Drucksensorelementen basieren. Unter einem Feuchtesensor ist grundsätzlich ein beliebiges Sensorelement zu verstehen, welches eingerichtet ist, um eine Feuchtigkeit des fluiden Mediums zu erfassen. Beispielsweise kommen hierbei resistive und/oder kapazitive Sensorelemente in Betracht, wie sie aus dem Stand der Technik bekannt sind. Beispiele derartiger Feuchtigkeitssensoren sind in Robert Bosch GmbH: Sensoren im Kraftfahrzeug, Ausgabe 2007, Seiten 92-95 beschrieben. Auch andere Arten von Feuchtesensoren kommen jedoch grundsätzlich alternativ oder zusätzlich für den Einsatz im Rahmen der vorliegenden Erfindung in Betracht. Die erfindungsgemäße Ausgestaltung der Sensorvorrichtung bietet den Vorteil, wie unten noch näher ausgeführt wird, dass der Elektronikraum und der Sensorraum unabhängig voneinander bestückbar sind. Auf diese Weise kann beispielsweise die erfindungsgemäße Sensorvorrichtung ohne größere Änderungen des Designs und/oder der Konstruktionswerkzeuge, auf einer Produktionsvorrichtung hergestellt werden, welche auch für Sensorvorrichtungen ohne Drucksensor und ohne Feuchtesensor genutzt werden kann.

Das Elektronikmodul kann insbesondere eine Ansteuer- und/oder Auswerteschaltung für den mindestens einen Strömungssensor umfassen. Der Drucksensor und der Feuchtesensor können insbesondere jeweils eine Sensorelektronik aufweisen, welche getrennt von dem Elektronikmodul ausgebildet ist. Das Elektronikmodul kann insbesondere einen Sensorträger umfassen, wobei der Sensorträger den Strömungssensor trägt und aus dem Elektronikraum in mindestens einen von dem fluiden Medium durchströmbaren Kanal in dem Sensorgehäuse ragt. Auch andere Ausgestaltungen sind jedoch grundsätzlich möglich. Beispielsweise kann in einer Wand des Elektronikraums ein Durchbruch vorgesehen sein, welcher den Elektronikraum mit dem mindestens einen Kanal verbindet, wobei der Sensorträger durch den Durchbruch in den mindestens einen Kanal ragt.

Der Elektronikraum und der Sensorraum sind von einander gegenüberliegenden Seiten des Sensorgehäuses zugänglich, beispielsweise für eine Bestückung. Wie oben ausgeführt umfasst die Sensorvorrichtung mindestens einen Steckfühler, welcher zumindest teilweise in das fluide Medium einbringbar ist. Der Elektronikraum und der Sensorraum sind von einander gegenüberliegenden Seiten des Steckfühlers der Sensorvorrichtung zugänglich. Der Steckfühler weist eine Einsteckrichtung auf, entlang beispielsweise einer Achse, wobei die einander gegenüberliegenden Seiten im Wesentlichen parallel zu der Einsteckrichtung ausgestaltet sind. Beispielsweise kann der Steckfühler in einer Ebene senkrecht zur Einsteckrichtung einen im Wesentlichen rechteckigen Querschnitt aufweisen, mit einer der Strömung entgegenweisenden Stirnseite und einer der Strömung abweisenden Rückseite, wobei die Seiten im Wesentlichen parallel zur Strömungsrichtung angeordnet sein können. Insbesondere kann es sich bei diesen Seiten um die Längsseiten eines Rechtecks handeln. Der Elektronikraum und der Sensorraum können insbesondere jeweils unabhängig voneinander durch Verschlusselemente, insbesondere mindestens einen Elektronikraumdeckel und/oder mindestens einen Sensorraumdeckel, verschließbar sein. Diese Deckel können beispielsweise mit dem Gehäuse verrastbar sein oder auf andere Weise verschließbar sein. Alternativ oder zusätzlich zu einer Deckelkonstruktion sind auch andere Arten von Verschlusselementen denkbar.

Das Sensorgehäuse kann insbesondere mindestens eine mit dem Sensorraum verbundene Einlassöffnung zur Beaufschlagung des Drucksensors mit einem Druck des fluiden Mediums und/oder zur Beaufschlagung des Feuchtesensors mit dem fluiden Medium bzw. dessen Feuchtigkeit aufweisen. Die mindestens eine Einlassöffnung kann für den Drucksensor und den Feuchtesensor getrennt ausgebildet sein. Alternativ oder zusätzlich können jedoch auch eine oder mehrere gemeinsame Einlassöffnungen verwendet werden. Die Einlassöffnung kann insbesondere derartig ausgestaltet sein, dass das fluide Medium ungehindert durch die Einlassöffnung in den Sensorraum eindringen kann. Alternativ kann die mindestens eine Einlassöffnung jedoch auch ganz oder teilweise verschlossen ausgestaltet sein, beispielsweise durch mindestens eine Membran, insbesondere mindestens eine für Feuchtigkeit zumindest teilweise durchlässige Membran, insbesondere eine semipermeable Membran. Die mindestens eine Einlassöffnung kann grundsätzlich einen beliebigen Querschnitt aufweisen, beispielsweise einen rechteckigen und/oder runden und/oder polygonalen Querschnitt. Auch andere Ausgestaltungen sind möglich. Die mindestens eine Einlassöffnung kann insbesondere in einem Sensorraumdeckel des Sensorgehäuses vorgesehen sein, wobei mittels des Sensorraumdeckels der Sensorraum zumindest teilweise verschließbar ist.

Der Feuchtesensor kann insbesondere mindestens eine zumindest teilweise in dem Sensorraum angeordnete Messkammer aufweisen. Beispielsweise kann der Feuchtesensor selbst ein Gehäuse aufweisen, in welchem die Messkammer angeordnet ist. Die Messkammer kann insbesondere durch mindestens eine für Feuchtigkeit zumindest teilweise durchlässige, also permeable, Membran abgeschlossen sein. Der Feuchtesensor kann insbesondere mindestens einen Schaltungsträger aufweisen, beispielsweise mindestens eine Leiterplatte und/oder eine andere Art von Schaltungsträger. Beispielsweise kann der Schaltungsträger aus einem Kunststoffmaterial und/oder Keramikmaterial und/oder Leiterplattenaufbau hergestellt sein. Auch andere Ausgestaltungen sind möglich. Der Schaltungsträger kann insbesondere vollständig oder teilweise in dem Sensorraum aufgenommen sein. Der Drucksensor kann unabhängig von dem Schaltungsträger des Feuchtesensors in dem Sensorraum angeordnet sein, beispielsweise neben dem Schaltungsträger. Alternativ oder zusätzlich kann der Drucksensor jedoch auch ganz oder teilweise mit dem Schaltungsträger des Sensorraums verbunden sein. Der Drucksensor und der Feuchtesensor können insbesondere mindestens eine gemeinsame Zuleitung umfassen, beispielsweise mindestens eine Versorgungsleitung und/oder mindestens eine Signalleitung und/oder mindestens eine Masseleitung. Insbesondere kann mindestens eine Zuleitung des Drucksensors mit mindestens einer Zuleitung des Feuchtesensors über mindestens einen gemeinsamen Steckerkontakt elektrisch kontaktierbar sein.

Die Sensorvorrichtung kann darüber hinaus auch ein oder mehrere weitere Sensorelemente umfassen, zur Erfassung mindestens einer weiteren physikalischen und/oder chemischen Eigenschaft des fluiden Mediums. Insbesondere kann die Sensorvorrichtung weiterhin mindestens einen Temperaturfühler aufweisen, insbesondere mindestens einen auf einer Außenseite des Sensorgehäuses angeordneten Temperaturfühler. Beispielsweise kann ein Temperaturfühler derart auf einer Außenseite des Sensorgehäuses angeordnet sein, dass dieser auf derselben Seite angeordnet ist wie auch die Einlassöffnung für die Feuchtigkeit und/oder die Drucköffnung. Auch eine andere Ausgestaltung ist jedoch grundsätzlich möglich. Insbesondere kann der Temperaturfühler in mindestens einer Vertiefung auf einer Seitenwand des Steckfühlers angeordnet sein. Der'Temperaturfühler kann insbesondere mindestens einen temperaturabhängigen Widerstand umfassen. Alternativ oder zusätzlich sind auch andere Arten von Temperaturfühlern einsetzbar. Der Temperaturfühler kann insbesondere frei von dem strömenden fluiden Medium überströmbar sein, also nicht von dem Gehäuse des Sensorelements umschlossen sein. Der Temperaturfühler kann insbesondere durch einen Kraftschluss und/oder Formschluss mit dem Gehäuse verbunden sein, beispielsweise indem Zuleitungen des Temperaturfühlers mit einer Außenwand des Sensorgehäuses verstemmt oder auf andere Weise verbunden sind. Zuleitungen des Temperaturfühlers können insbesondere ins Innere des Sensorgehäuses hineingeführt sein und dort beispielsweise mit dem Elektronikmodul verbunden sein und/oder mit einem Steckverbinder der Sensorvorrichtung verbunden sein. Verschiedene andere Ausgestaltungen sind denkbar.

Die oben beschriebene Sensorvorrichtung weist gegenüber bekannten Sensorvorrichtungen zahlreiche Vorteile auf. Die Sensorvorrichtung kann insbesondere von ihren äußeren Dimensionen her im Wesentlichen kompatibel mit herkömmlichen Sensorvorrichtungen ohne Drucksensor und ohne Feuchtesensor ausgestaltet werden. Insbesondere können Steckfühler hergestellt werden, welche sich, unabhängig davon, ob diese nun einen Drucksensor und einen Feuchtesensor enthalten oder nicht, in ihren äußeren Abmessungen gleich verhalten. Weiterhin können Sensorvorrichtungen der genannten Art mit und ohne Drucksensoren bzw. Feuchtesensoren auf ein und derselben Fertigungslinie gefertigt werden wie auch Sensorvorrichtungen, welche keine derartigen Druck- und/oder Feuchtesensoren umfassen. Auf diese Weise werden eine Produktion, eine Logistik und eine Lagerhaltung der beschriebenen Sensorvorrichtungen deutlich vereinfacht. So können beispielsweise verschiedene Sensorgehäuse vorgehalten werden, welche sich praktisch ausschließlich in der Ausgestaltung des Elektronikraums und des optionalen Sensorraums unterscheiden, indem beispielsweise für Sensorvorrichtungen mit Drucksensor und Feuchtesensor Sensorgehäuse mit Sensorraum vorgesehen werden, und indem in anderen Sensorgehäusen kein derartiger Sensorraum vorgesehen wird. Alternativ kann die Logistik auch mit einem einzigen Typ von Sensorgehäuse arbeiten, wobei im Fall einer Herstellung von Sensorvorrichtungen ohne Drucksensor und ohne Feuchtesensor beispielsweise der Sensorraum unbestückt verbleiben kann. Insgesamt lassen sich hierdurch Konstruktion, Fertigung, Logistik und Lagerhaltung deutlich vereinfachen und verbessern, und die Sensorvorrichtungen lassen sich erheblich kostengünstiger ausgestalten. Außerdem besteht die Möglichkeit, auch bereits vorhandene, konventionelle Sensorvorrichtungen ohne Druck- und Feuchtesensoren durch erfindungsgemäße Sensorvorrichtungen auszutauschen.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine herkömmliche Sensorvorrichtung zur Erfassung mindestens einer Strömungseigenschaft eines fluiden Mediums; und
- Figuren 2A und 2B: verschiedene Ansichten einer erfindungsgemäßen Ausführungsform einer Sensorvorrichtung.

### Ausführungsformen der Erfindung

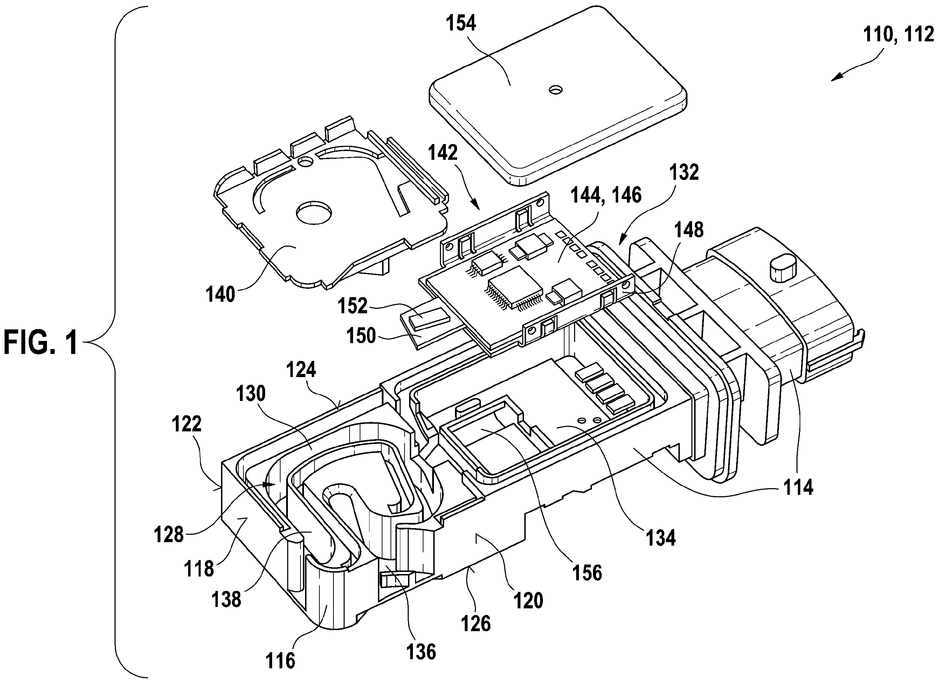

In Figur 1 ist ein dem Stand der Technik entsprechendes Ausführungsbeispiel einer Sensorvorrichtung 110 zur Erfassung mindestens einer Strömungseigenschaft eines fluiden Mediums in einer perspektivischen, geöffneten Darstellung gezeigt. Die Sensorvorrichtung 110 ist in diesem Ausführungsbeispiel als Heißfilmluftmassenmesser 112 ausgestaltet und umfasst einen Steckfühler 114, welcher in eine Strömung des fluiden Mediums, beispielsweise eine Ansaugluftmasse, einbringbar ist, beispielsweise reversibel einsteckbar in ein Ansaugrohr oder permanent installiert. Der Heißfilmluftmassenmesser 112 entspricht einem kommerziell erhältlichen Luftmassensensor vom Typ HFM7 der Robert Bosch GmbH, Deutschland. Der Steckfühler 114 umfasst ein Sensorgehäuse 116, mit einer am weitesten in das fluide Medium hineinragenden Kopfseite 118, einer dem fluiden Medium entgegenweisenden Stirnseite 120, einer dem fluiden Medium abgewandten Rückseite 122 und zwei Seitenflächen in Form einer ersten Seite 124 und einer zweiten Seite 126, wobei in der Darstellung gemäß Figur 1 die erste Seite 124 erkennbar ist.

Innerhalb des Sensorgehäuses 116 sind ein Kanalbereich 128 mit mindestens einem von dem fluiden Medium durchströmbaren Kanal 130 und ein Elektronikbereich 132 mit einem in das Sensorgehäuse 116 eingelassenen Elektronikraum 134 aufgenommen. Der Kanal 130 weist seinerseits einen Hauptkanal 136 und einen Bypasskanal 138 auf. Der Kanalbereich 128 ist durch einen Kanalraumdeckel 140 auf der ersten Seite 124 verschließbar. Der Elektronikraum 134 ist in diesem Ausführungsbeispiel als rechteckige Vertiefung in der ersten Seite 124 des Sensorgehäuses 116 ausgestaltet. In dem Elektronikraum 134 ist ein Elektronikmodul 142 aufgenommen, welches einen Schaltungsträger 144 mit einer Ansteuer- und/oder Auswerteschaltung 146 umfasst, der beispielsweise auf einem Bodenblech 148 aufgenommen sein kann. Weiterhin umfasst das Elektronikmodul 142 einen Sensorträger 150 in Form eines an das Bodenblech 148 angespritzten Flügels, welcher in den Bypasskanal 138 hineinragt. In den Sensorträger 150 ist ein Strömungssensor 152 in Form eines Heißfilmluftmassenmesserchips eingelassen. Der Elektronikraum 134 ist auf der ersten Seite 124 durch einen Elektronikraumdeckel 154 verschließbar. Weiterhin kann das Sensorgehäuse 116 auf der zweiten Seite 126 eine Kühlöffnung 156 umfassen, die sich in den Elektronikraum 134 hinein erstreckt.

Bei der kommerziell verfügbaren Ausgestaltung der Sensorvorrichtung 110 gemäß Figur 1 bilden der Sensorträger 150 und das Bodenblech 148 somit eine Einheit, welche als Elektronikmodul 142 bezeichnet wird und welche beispielsweise in diesem oder auch in anderen Ausführungsbeispielen eine Ansteuer- und/oder Auswerteschaltung 146 beinhalten kann, zur Ansteuerung und/oder Auswertung des Strömungssensors 152. Zusätzlich zum Strömungssensor 152 wird noch die Elektronik des Schaltungsträgers 144 und der Ansteuer- und/oder Auswerteschaltung 146 auf das Bodenblech 148 aufgeklebt. Der Strömungssensor 152 und die Ansteuer- und/oder Auswerteschaltung 146 werden in der Regel durch Bondverbindungen miteinander verbunden. Das so entstandene Elektronikmodul 142 wird beispielsweise in den Elektronikraum 134 eingeklebt, und der gesamte Steckfühler 114 wird durch die Deckel 140, 154 verschlossen.

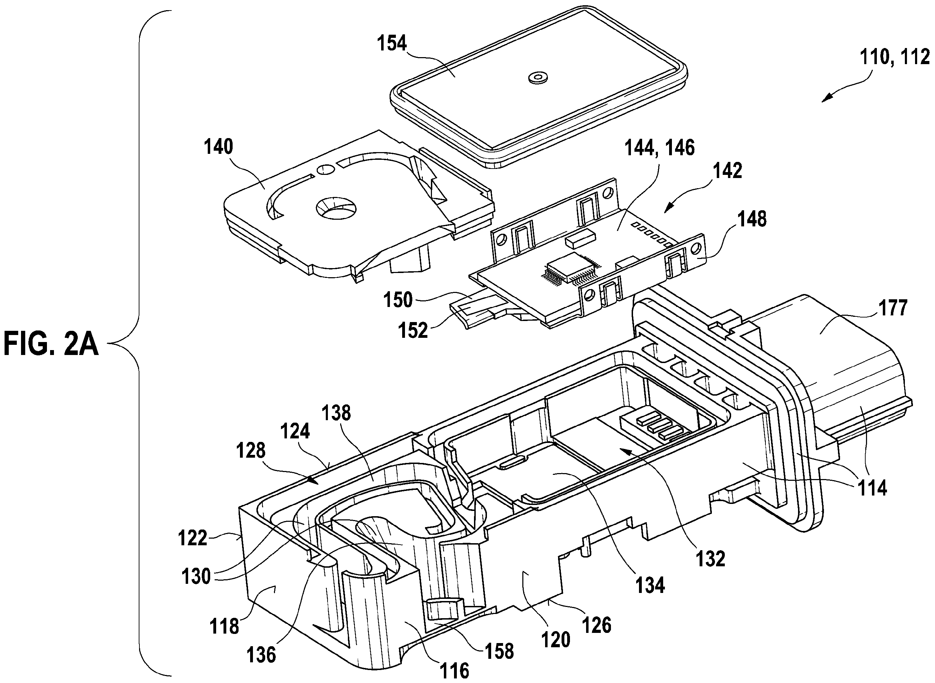

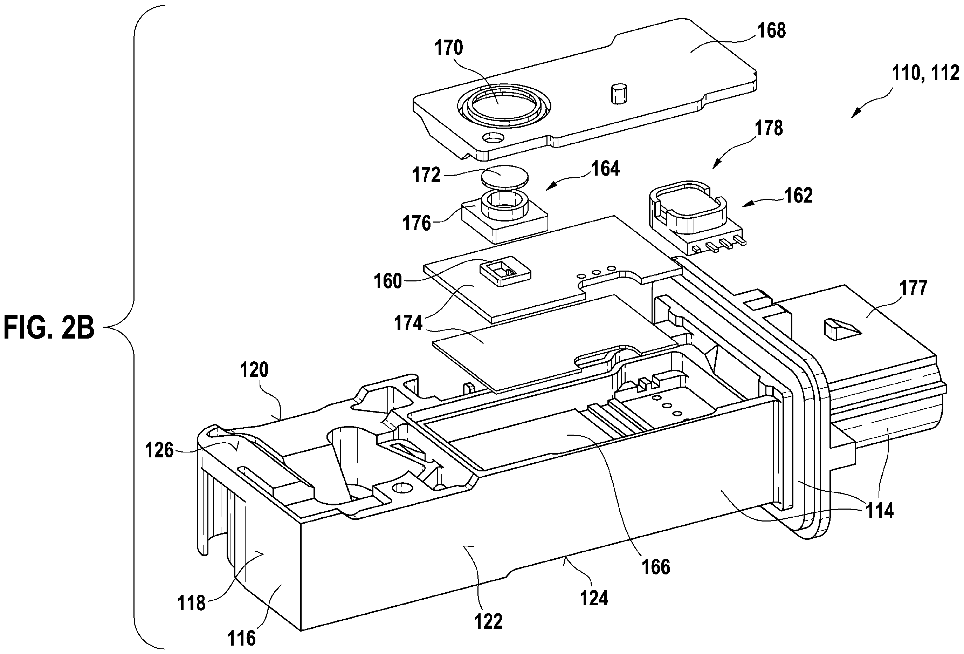

In den Figuren 2A und 2B ist hingegen ein erfindungsgemäßes Ausführungsbeispiel einer Sensorvorrichtung 110 gezeigt. Wiederum handelt es sich exemplarisch um einen Heißfilmluftmassenmesser 112, welcher vorzugsweise zunächst grundsätzlich ähnlich zu der Sensorvorrichtung 110 gemäß Figur 1 ausgestaltet ist. Dementsprechend kann für weite Teile des Aufbaus der Sensorvorrichtung 110 auf die Beschreibung der Figur 1 verwiesen werden. Dabei zeigt Figur 2A eine geöffnete perspektivische Ansicht der ersten Seite 124, wohingegen Figur 2B eine perspektivische Ansicht der zweiten Seite 126 zeigt. Wiederum umfasst der Heißfilmluftmassenmesser 112 einen Steckfühler 114 mit einem Sensorgehäuse 116. In dem Sensorgehäuse 116 ist wiederum ein Kanalbereich 128 vorgesehen, analog zu dem Steckfühler 114 gemäß Figur 1, mit einem Kanal 130, in welchen über eine auf einer Stirnseite 120 des Steckfühlers 114 vorgesehene Kanaleinlassöffnung 158 fluides Medium einströmen kann. Weiterhin ist wiederum ein Elektronikraum 134 in einem Elektronikbereich 132 vorgesehen, in welchem ein Elektronikmodul 142 mit einem Strömungssensor 152 vorgesehen ist. Diesbezüglich kann zumindest weitgehend auf die obige Beschreibung verwiesen werden. Der Kanalbereich 128 ist wiederum durch einen Kanalraumdeckel 140 verschließbar, und der Elektronikraum 134 durch einen Elektronikraumdeckel 154. Auch andere Ausgestaltungen sind grundsätzlich möglich. Bei der Sensorvorrichtung 110 gemäß den Figuren 2A und 2B sind zusätzlich ein Feuchtesensor 160 und ein Drucksensor 162 in dem vorhandenen Bauraum integriert. Dabei kann es sich bei dem Feuchtesensor 160 und/oder dem Drucksensor 162 jeweils um einzelne Sensoren handeln oder Sensormodule. Beispielsweise kann der Feuchtesensor 160 als Feuchtemodul 164 ausgestaltet sein oder in einem Feuchtemodul 164 enthalten sein. Der Feuchtesensor 160 und der Drucksensor 162 können dabei getrennt voneinander ausgebildet sein, können jedoch grundsätzlich auch zusammengefasst ausgebildet werden.

Im Unterschied zu der bekannten Ausgestaltung gemäß Figur 1 ist bei der Sensorvorrichtung 110 gemäß den Figuren 2A und 2B eine räumliche Trennung zwischen dem Elektronikmodul 142 einerseits und dem Drucksensor 162 und dem Feuchtesensor 160 andererseits vorgesehen. So sind der Drucksensor 162 und der Feuchtesensor 160 bei der erfindungsgemäßen Ausgestaltung gemäß den Figuren 2A und 2B in einem von dem Elektronikraum 134 getrennt ausgebildeten Sensorraum 166 aufgenommen. Dieser Sensorraum 166 ist in diesem Beispiel exemplarisch wiederum als Vertiefung in der zweiten Seite 126, welche der ersten Seite 124 mit dem Elektronikraum 134 gegenüberliegt, ausgestaltet. Somit kann dieser Sensorraum 166 beispielsweise als Rückseitenkammer ausgestaltet sein und von der zweiten Seite 126 her bestückbar ausgestaltet sein. Der Sensorraum 166 ist somit zumindest im Wesentlichen getrennt von dem Elektronikraum 134, so dass in diesem oder auch in anderen Ausführungsbeispielen eine getrennte Einbringung des Elektronikmoduls 142 und des Druck- bzw. Feuchtesensors 160, 162 erfolgen kann, beispielsweise aus unterschiedlichen Bestückungsrichtungen her. Der Sensorraum 166 kann beispielsweise, wie in Figur 2B erkennbar, durch mindestens ein Verschlusselement, insbesondere mindestens einen Sensorraumdeckel 168, verschließbar sein. Dieser Sensorraumdeckel 168 und/oder andere Teile des Sensorgehäuses 116 können in dem dargestellten Ausführungsbeispiel eine oder mehrere Einlassöffnungen 170 umfassen, welche der Druck- und/oder Feuchtemessung dienen können. Im dargestellten Ausführungsbeispiel gemäß Figur 2B ist exemplarisch eine runde Einlassöffnung 170 im Sensorraumdeckel 168 vorgesehen. Auch andere Ausgestaltungen sind jedoch grundsätzlich möglich. Exemplarisch ist diese Einlassöffnung 170 beispielsweise oberhalb einer semipermeablen Membran 172 des Feuchtesensors 160 angeordnet, so dass über die Einlassöffnung 170 der Feuchtesensor 160 mit Feuchtigkeit beaufschlagbar ist. Gleichzeitig kann die Einlassöffnung 170 und/oder eine getrennte Einlassöffnung auch zur Beaufschlagung des Drucksensors 162 mit Druck dienen.

Exemplarisch ist, wie oben beschrieben, der Feuchtesensor 160 in dem dargestellten Ausführungsbeispiel Bestandteil eines Feuchtemoduls 164, welches als Ganzes auch selbst als Feuchtesensor 160 wirken kann. Dieses Feuchtemodul 164 und/oder der Feuchtesensor 160 können beispielsweise mindestens einen Schaltungsträger 174 umfassen, auf welchem optional eine oder mehrere Leiterbahnen und/oder eine oder mehrere elektronische Bauelemente aufgenommen sein können, beispielsweise eine Ansteuerschaltung für den Feuchtesensor 160. Auch andere Ausgestaltungen sind jedoch grundsätzlich möglich. Der Feuchtesensor 160 und/oder das Feuchtemodul 164, wobei zwischen beiden Einheiten im Folgenden nicht unterschieden wird, kann weiterhin mindestens eine Messkammer 176 umfassen, in welcher beispielsweise der mindestens eine Feuchtesensor 160 und/oder ein Chip desselben aufgenommen sein können. Diese kann beispielsweise auf den Schaltungsträger 174 aufgesetzt sein und nach oben hin beispielsweise durch die semipermeable Membran 172 abgeschlossen sein. Der Drucksensor 162 kann beispielsweise neben dem Feuchtemodul 164 in dem Sensorraum 166 aufgenommen sein. Auch andere Ausgestaltungen sind möglich.

Auf diese Weise lässt sich, beispielsweise mittels des in den Figuren 2A und 2B dargestellten Ausführungsbeispiels, ein Rückseitenaufbau realisieren, bei welchem die Montage des Druck- und Feuchtesensors 162, 160 auf einer separaten Fertigungslinie erfolgen kann. Der weitere Aufbau und die weitere Bestückung des Elektronikraums 134 können beispielsweise auf vorhandenen Serieneinrichtungen, beispielsweise zur Herstellung der Sensorvorrichtung 110 gemäß Figur 1, erfolgen. Der Vorteil des Rückseitenaufbaus gegenüber dem bekannten Aufbau besteht in den komplett voneinander getrennten und unabhängigen Räumen 134, 166. Durch den Sensorraum 166 zur Integration von Druck- und Feuchtemessung bleibt der Elektronikraum 134 zur Montage des Elektronikmoduls 142, im Gegensatz zum Aufbaukonzept gemäß Figur 1, in der Regel vorzugsweise unverändert.

Im Gegensatz zu bekannten Aufbauschemata ergeben sich für die Montage des Elektronikmoduls 142 somit vorzugsweise keine Änderungen, da die Größe und Lage der Auflageflächen des Elektronikmoduls 142 beispielsweise unverändert bleiben können. Modifikationen an Serienrichtungen und Prozessen sind somit in der Regel nicht erforderlich. Die Montage des Druck- und Feuchtesensors 162, 160 im Steckfühler 114 kann auf einer separaten Fertigungslinie erfolgen, beispielsweise vor oder nach der Bestückung des Elektronikraums 134. Beispielsweise kann ein derartig vormontiertes Steckfühlermodul dann auf eine existierende Serieneinrichtung transferiert und dort weiterverarbeitet werden. Das Feuchtemodul 164 kann beispielsweise eine Leiterplatte als Schaltungsträger 174 umfassen. Auf dieser kann sich dann der eigentliche Feuchtesensor 160 befinden, sowie gegebenenfalls eine Ansteuer- und/oder Auswerteschaltung des Feuchtemoduls 164. Der eigentliche Feuchtesensor 160 kann beispielsweise in der Messkammer 176 angeordnet sein, deren Öffnung durch die semipermeable Membran 172 verschlossen sein kann. Diese semipermeable Membran 172 kann beispielsweise für Feuchte durchlässig sein und kann den Feuchtesensor 160 gleichzeitig jedoch vor eindringendem Wasser und Schmutz schützen. Das Feuchtemodul 164 kann beispielsweise in den Sensorraum 166 eingeklebt werden und/oder auf andere Weise in dem Sensorraum 166 fixiert werden. Die Verbindung des Feuchtemoduls 164 zu einem Stecker 177 des Steckfühlers 114 kann beispielsweise durch Bondverbindungen erfolgen.

Als Drucksensor 162 kann beispielsweise ein mikromechanischer Drucksensor verwendet werden, welcher beispielsweise wiederum auch in einem Drucksensormodul 178 integriert sein kann. Beispielsweise kann als Drucksensor 162 der Premold des kommerziell erhältlichen Drucksensors vom Typ DS-S3 der Robert Bosch GmbH, Deutschland, verwendet werden. Der Drucksensor 162 kann insbesondere neben dem Feuchtemodul 164 montiert werden und beispielsweise wiederum mit dem Sensorgehäuse 116 verbunden werden, beispielsweise wiederum durch eine Klebeverbindung. Wiederum kann eine Kontaktierung des Drucksensors 162 und eine elektrische Verbindung mit dem Stecker 177 erfolgen. Beispielsweise kann hierzu eine Schweißverbindung verwendet werden. Auch andere Ausgestaltungen sind jedoch möglich. Der Drucksensor 162 kann durch dieselbe Einlassöffnung 170 mit Druck beaufschlagt werden, die auch den Feuchtesensor 160 mit Feuchtigkeit beaufschlagt. Alternativ oder zusätzlich können jedoch auch ein oder mehrere Einlassöffnungen 170 als separate Druckmessöffnungen vorgesehen sein, beispielsweise auf der zweiten Seite 126 des Steckfühlers 114, beispielsweise wiederum im Sensorraumdeckel 168.

## Patentansprüche

1. Sensorvorrichtung (110) zur Erfassung mindestens einer Strömungseigenschaft eines fluiden Mediums, umfassend
- einen in das fluide Medium einbringbaren Steckfühler (114) mit einem Sensorgehäuse (114), das ausgebildet ist, in das fluide Medium hineinzuragen und eine am weitesten in das fluide Medium hineinragende Kopfseite (118), eine dem fluiden Medium entgegenweisende Stirnseite (120), eine dem fluiden Medium abgewandte Rückseite (122) und zwei parallel zur Strömungsrichtung angeordnete einander gegenüberliegende Seiten in Form einer ersten Seite (124) und einer zweiten Seite (126) aufweist, wobei innerhalb des Sensorgehäuses (116) ein Kanalbereich (128) mit mindestens einem von dem fluiden Medium durchströmbaren Kanal (130) aufgenommen ist und an der Stirnseite (120) des Sensorgehäuses (116) eine Kanaleinlassöffnung (158) vorgesehen ist, über die das fluide Medium einströmen kann,
- einen Elektronikraum (134), der mindestens eine von einer Oberfläche des Sensorgehäuses (112) aus zugängliche Vertiefung in dem Sensorgehäuse (112) umfasst, wobei der Elektronikraum auf der ersten Seite (124) mit einem Elektronikraumdeckel (154) verschlossen ist,
- einem Elektronikmodul (142), das einen Sensorträger (150) umfasst, der einen Strömungssensor (152) trägt, wobei das Elektronikmodul (142) zumindest teilweise in dem Elektronikraum (134) aufgenommen ist und der Sensorträger (128) aus dem Elektronikraum (134) in dem vom fluiden Medium durchströmbaren Kanal (130) ragt, **dadurch gekennzeichnet, dass**
- weiterhin innerhalb des Sensorgehäuses (116) mindestens ein Drucksensor (162) und mindestens ein Feuchtesensor (160) aufgenommen sind,
- das Sensorgehäuse (116) mindestens einen von dem Elektronikraum (134) getrennt ausgebildeten Sensorraum (166) umfasst und der Drucksensor (162) und vorzugsweise auch der Feuchtesensor (160) zumindest teilweise in dem Sensorraum (166) aufgenommen sind,
- der Elektronikraum (134) und der Sensorraum (166) so ausgebildet sind, dass sie von den einander gegenüberliegenden Seiten (124, 126) des Sensorgehäuses (116) zugänglich sind.

2. Sensorvorrichtung (110) nach einem der vorhergehenden Ansprüche, wobei der Elektronikraum (134) und der Sensorraum (166) jeweils unabhängig voneinander durch Verschlusselemente, insbesondere mindestens einen Elektronikraumdeckel (154) und mindestens einen Sensorraumdeckel (168), verschließbar sind.

3. Sensorvorrichtung (110) nach einem der vorhergehenden Ansprüche, wobei das Sensorgehäuse (116) mindestens eine mit dem Sensorraum (166) verbundene Einlassöffnung (170) zur Beaufschlagung des Drucksensors (162) mit einem Druck des fluiden Mediums und/oder zur Beaufschlagung des Feuchtesensors (160) mit einer Feuchtigkeit des fluiden Mediums aufweist.

4. Sensorvorrichtung (110) nach dem vorhergehenden Anspruch, wobei die mindestens eine Einlassöffnung (170) in einem Sensorraumdeckel (168) des Sensorgehäuses (116) vorgesehen ist, wobei mittels des Sensorraumdeckels (168) der Sensorraum (166) zumindest teilweise verschließbar ist.

5. Sensorvorrichtung (110) nach einem der vorhergehenden Ansprüche, wobei der Feuchtesensor (160) mindestens eine in dem Sensorraum (166) angeordnete Messkammer (176) aufweist.

6. Sensorvorrichtung (110) nach dem vorhergehenden Anspruch, wobei die Messkammer (176) durch mindestens eine für Feuchtigkeit zumindest teilweise permeable Membran (172) abgeschlossen ist.

7. Sensorvorrichtung (110) nach einem der vorhergehenden Ansprüche, wobei der Feuchtesensor (160) mindestens einen Schaltungsträger (174) aufweist, wobei der Schaltungsträger (174) in dem Sensorraum (166) aufgenommen ist.

8. Sensorvorrichtung nach dem vorhergehenden Anspruch, wobei der Drucksensor (162) neben dem Schaltungsträger (174) des Feuchtesensors (160) in dem Sensorraum (166) angeordnet ist.

## Claims

1. Sensor apparatus (110) for capturing at least one flow property of a fluid medium, comprising
- a plug-in sensor (114) which can be introduced into the fluid medium and has a sensor housing (114) which is designed to project into the fluid medium and has a head side (118) projecting furthest into the fluid medium, an end face (120) which points in the opposite direction to the fluid medium, a rear side (122) facing away from the fluid medium and two sides in the form of a first side (124) and a second side (126) which are arranged opposite one another parallel to the direction of flow, wherein a channel region (128) having at least one channel (130), through which the fluid medium can flow, is accommodated inside the sensor housing (116), and a channel inlet opening (158), via which the fluid medium can flow in, is provided on the end face (120) of the sensor housing (116),
- an electronics compartment (134) which comprises at least one depression in the sensor housing (112) which is accessible from a surface of the sensor housing (112), wherein the electronics compartment is closed on the first side (124) using an electronics compartment cover (154),
- an electronics module (142) comprising a sensor carrier (150) which carries a flow sensor (152), wherein the electronics module (142) is at least partially accommodated in the electronics compartment (134), and the sensor carrier (128) projects from the electronics compartment (134) into the channel (130) through which the fluid medium can flow,
**characterized in that**
- at least one pressure sensor (162) and at least one moisture sensor (160) are also accommodated inside the sensor housing (116),
- the sensor housing (116) comprises at least one sensor compartment (166) formed separately from the electronics compartment (134), and the pressure sensor (162) and preferably also the moisture sensor (160) are at least partially accommodated in the sensor compartment (166),
- the electronics compartment (134) and the sensor compartment (166) are designed in such a manner that they are accessible from mutually opposite sides (124, 126) of the sensor housing (116).

2. Sensor apparatus (110) according to one of the preceding claims, wherein the electronics compartment (134) and the sensor compartment (166) can each be closed independently of one another by means of closure elements, in particular at least one electronics compartment cover (154) and at least one sensor compartment cover (168).

3. Sensor apparatus (110) according to one of the preceding claims, wherein the sensor housing (116) has at least one inlet opening (170) which is connected to the sensor compartment (166) and is intended to apply a pressure of the fluid medium to the pressure sensor (162) and/or to apply a moisture of the fluid medium to the moisture sensor (160).

4. Sensor apparatus (110) according to the preceding claim, wherein the at least one inlet opening (170) is provided in a sensor compartment cover (168) of the sensor housing (116), wherein the sensor compartment (166) can be at least partially closed by means of the sensor compartment cover (168).

5. Sensor apparatus (110) according to one of the preceding claims, wherein the moisture sensor (160) has at least one measurement chamber (176) arranged in the sensor compartment (166).

6. Sensor apparatus (110) according to the preceding claim, wherein the measurement chamber (176) is closed by means of at least one membrane (172) which is at least partially permeable to moisture.

7. Sensor apparatus (110) according to one of the preceding claims, wherein the moisture sensor (160) has at least one circuit carrier (174), wherein the circuit carrier (174) is accommodated in the sensor compartment (166).

8. Sensor apparatus according to the preceding claim, wherein the pressure sensor (162) is arranged beside the circuit carrier (174) of the moisture sensor (160) in the sensor compartment (166).

## Revendications

1. Dispositif de détection (110) destiné à détecter une propriété d'écoulement d'un milieu fluide, comportant
- une sonde enfichable (114) qui peut être introduite dans le milieu fluide, comprenant un boîtier de capteur (114) qui est configuré pour faire saillie dans le milieu fluide et possède un côté tête (118) faisant saillie le plus loin dans le milieu fluide, un côté frontal (120) orienté vers le milieu fluide, un côté arrière (122) à l'opposé du milieu fluide et deux côtés disposés en vis-à-vis l'un de l'autre parallèlement à la direction d'écoulement sous la forme d'un premier côté (124) et d'un deuxième côté (126), une zone de canal (128) pourvue d'au moins un canal (130) qui peut être traversé par un flux du milieu fluide étant accueillie à l'intérieur du boîtier de capteur (116) et une ouverture d'entrée de canal (158), par le biais de laquelle le milieu fluide peut s'écouler vers l'intérieur, se trouve au niveau du côté frontal (120) du boîtier de capteur (116),
- un espace électronique (134) qui comporte au moins une empreinte dans le boîtier de capteur (112) accessible depuis une surface du boîtier de capteur (112), l'espace électronique étant fermé sur le premier côté (124) par un couvercle d'espace électronique (154),
- un module électronique (142), qui comporte un porte-capteur (150), lequel porte un capteur d'écoulement (152), le module électronique (142) étant au moins partiellement accueilli dans l'espace électronique (134) et le porte-capteur (128) faisant saillie hors de l'espace électronique (134) dans le canal (130) qui peut être traversé par un flux du milieu fluide,
**caractérisé en ce que**
- au moins un capteur de pression (162) et au moins un capteur d'humidité (160) sont en plus accueillis à l'intérieur du boîtier de capteur (116),
- le boîtier de capteur (116) comporte au moins un espace de capteur (166) configuré séparément de l'espace électronique (134) et le capteur de pression (162) et de préférence aussi le capteur d'humidité (160) sont au moins partiellement accueillis dans l'espace de capteur (166),
- l'espace électronique (134) et l'espace de capteur (166) sont configurés de telle sorte qu'ils sont accessibles depuis les côtés (124, 126) mutuellement en vis-à-vis du boîtier de capteur (116).

2. Dispositif de détection (110) selon l'une des revendications précédentes, l'espace électronique (134) et l'espace de capteur (166) pouvant respectivement être fermés indépendamment l'un de l'autre par des éléments de fermeture, notamment au moyen d'un couvercle d'espace électronique (154) et d'au moins un couvercle d'espace de capteur (168).

3. Dispositif de détection (110) selon l'une des revendications précédentes, le boîtier de capteur (116) possédant au moins une ouverture d'entrée (170) reliée à l'espace de capteur (166) destinée à soumettre le capteur de pression (162) à une pression du milieu fluide et/ou à soumettre le capteur d'humidité (160) à une humidité du milieu fluide.

4. Dispositif de détection (110) selon l'une des revendications précédentes, l'au moins une ouverture d'entrée (170) se trouvant dans un couvercle d'espace de capteur (168) du boîtier de capteur (116), l'espace de capteur (166) pouvant au moins partiellement être fermé au moyen du couvercle d'espace de capteur (168).

5. Dispositif de détection (110) selon l'une des revendications précédentes, le capteur d'humidité (160) possédant au moins une chambre de mesure (176) disposée dans l'espace de capteur (166).

6. Dispositif de détection (110) selon l'une des revendications précédentes, la chambre de mesure (176) étant fermée par au moins une membrane (172) qui est au moins partiellement perméable à l'humidité.

7. Dispositif de détection (110) selon l'une des revendications précédentes, le capteur d'humidité (160) possédant au moins un porte-circuit (174), le porte-circuit (174) étant accueilli dans l'espace de capteur (166).

8. Dispositif de détection selon la revendication précédente, le capteur de pression (162) étant disposé dans l'espace de capteur (166) à côté du porte-circuit (174) du capteur d'humidité (160).
